# Europäisches Patentamt

# European Patent Office

# Office européen des brevets

(11) Publication number: **0 128 234**
**B1**

(12) **EUROPEAN PATENT SPECIFICATION**

(45) Date of publication of patent specification: **25.11.87**

(51) Int. Cl.⁴: **B 01 D 23/12,** B 01 D 23/16, B 01 D 23/24

(21) Application number: **83105794.8**

(22) Date of filing: **13.06.83**

(54) Sand filtration apparatus.

(43) Date of publication of application:
**19.12.84 Bulletin 84/51**

(45) Publication of the grant of the patent:
**25.11.87 Bulletin 87/48**

(84) Designated Contracting States:
**DE FR GB SE**

(56) References cited:
**DE-A-2 126 631**
**FR-A-2 030 013**
**FR-A-2 068 023**
**GB-A-1 234 114**
**US-A-4 060 484**

(73) Proprietor: **Hitachi Metals, Ltd.**
**1-2, Marunouchi, 2-chome Chiyoda-ku Tokyo 100 (JP)**

(72) Inventor: **Iwasaki, Katsumi**
**c/o Hitachikinzokuryo 450, Niiborishinden Kumagaya-shi (JP)**
Inventor: **Kobayashi, Katsuya**
**Kamagaya-Daibutsu-Sky-Heights 101 2-3, Kamagaya, Kamagaya-shi (JP)**

(74) Representative: **Strehl, Peter, Dipl.-Ing. et al Strehl, Schübel-Hopf, Schulz Patentanwälte Widenmayerstrasse 17 Postfach 22 03 45 D-8000 München 22 (DE)**

EP 0 128 234 B1

# Description

This invention relates to improvements in relating to a sand filtration apparatus, and more particularly it is concerned with an apparatus of the type described in which a liquid is passed through a sand filtration layer in a horizontal direction to obtain a clear liquid by filtration.

Sand filtration is one of the techniques of solid/liquid separation for separating materials floating or suspended in a liquid by sedimentation or collision in a sand layer. Sand filtration has a long history and includes a slow filtration process used as in water works and a quick filtration process used as when a coagulant is used. This invention is directed to an apparatus suitable for carrying out the quick filtration process into practice.

Heretofore, sand filtration apparatus have been in use with water works or for treating industrial water. Owing to the fact that water resources are dwindling and control of waste water has become stringent, there has in recent years been an increasingly large demand for the sand filtration apparatus and the range of their use has increased and now includes tertiary processing, such as sewage disposal in large cities, small scale sewage disposal in urban communities and disposal of excrement, high-degree treatment of industrial water, simplified processing of factory water and water for miscellaneous uses and other systems of water supply.

In sand filtration, stationary bed type filtration, the filter medium is obturated and its filtering performance is reduced, making it necessary to wash and clean the filter medium at least once a day. While the filter medium is being cleaned, the filtering operation has to be interrupted. Thus an additional filtration apparatus has to be provided in reserve when it is desired to carry out filtration continuously for 24 hours a day. This makes it necessary to use accessory equipment and a control device for detecting obturation of the filter medium and carrying out filtration and cleaning cyclically. To eliminate these disadvantages of the prior art, proposals have been made to adopt movable bed type filtration in which filtration is performed by continuously removing obturated portions of the filter medium from the filtration layer and providing a fresh supply of filter medium. The tendency prevailing in the field of sand filtration technology nowadays is such that the movable bed type filtration is replacing the stationary bed type filtration.

In some sand filtration apparatus, a liquid to be treated is generally caused to flow downwardly through the sand filtration layer so that a clear liquid will be obtained at the lower end of the filtration layer after being treated by the filtration layer. In other sand filtration apparatus, a liquid to be treated is caused to flow upwardly through the sand filtration layer so that a clear liquid will be obtained at the upper end of the filtration layer. The volume of liquid treated by a sand filtration apparatus is in proportion to the cross-sectional area of the sand filtration layer through which it flows. Thus in sand filtration apparatus of the prior art, it has been necessary to increase the area of the installation if it is desired to increase the volume of the treated liquid.

In a sand filtration apparatus, it is required that the sand filtration layer be constructed such that the inlet side thereof is packed with coarse sand particles and the particle size of the sand is gradually reduced in going toward the outlet side. Stated differently, it is necessary that in a portion of the sand filtration layer near the inlet side the percentage of void be increased to allow only large masses of material incorporated in the liquid to be treated be caught by the coarse sand particles without minute floating materials or suspended materials being sedimented or adhering to the sand, and that the percentage of void be reduced in going from the inlet side toward the outlet side so that the void in the sand filtration layer becomes smaller to allow minuscule foreign matter to be sedimented and adhere to the sand, to thereby enable a clear liquid to be obtained. It is essential that the sand filtration layer have the aforesaid distribution of sand particles. If the arrangement of the coarse and minuscule sand particles were reversed or minuscule sand particles were disposed on the inlet side of a sand filtration layer, both large and small size foreign matter would adhere to the sand and obturation of the sand filtration layer would occur in a short period of time, thereby making it necessary to effect reactivation of the sand filtration layer often.

French patent publication 2 068 023 discloses a sand filtration apparatus which includes the features set forth in the first or preamble part of claim 1 and which is capable of continually filtering the water and simultaneously cleaning the sand from foreign matter wherein, when the reactivated sand is returned to the sand bed, larger sand particles are located on the water inlet side of the bed and smaller sand particles on the outlet side thereof. To achieve this particle size gradient, a screen-type classifier is disposed above the sand bed, in which the holes are the larger the closer they are arranged to the inlet side of the bed. An inherent problem with such classifier resides in the fact that the holes are easily clogged. Whenever this occurs, the classifier must be removed and cleaned and, while this is done, the filtration apparatus must either be shut down or the desired particle size gradient will not be achieved in certain parts of the sand bed where improper filtering will occur.

It is an object of the invention to provide a sand filtration apparatus of the type defined in the first or preamble part of claim 1, which avoids the above difficulties and is better capable of providing continuous proper filtering.

According to the present invention, this object is met by a sand filtering apparatus as characterised in claim 1. By achieving the desired grain size distribution, in which coarser sand particles settle closer to the inlet side and finer particles closer to the outlet side of the sand bed, by a regulating pipe surrounding the top opening of the pipe through which the sand is recirculated, the sand falling through the annular gap between the two pipes will form a conical dune on which finer sand particles will settle near the top while coarser particles will travel further down and settle closer to the foot of the dune at the periphery of the bed, which is the inlet side. There is no danger of the regulating means of the present invention to become clogged.

Embodiments of the invention will become more apparent from the following description when taken in conjunction with the accompanying drawings.

Fig. 1 is a vertical sectional view of the sand filtration apparatus comprising one embodiment of the invention;

Fig. 2 is a graph showing the distribution of grain size of the filter medium in the filtration chamber of the sand filtration apparatus according to the invention;

Fig. 3 is a graph showing the relation between the height of the piled sand layer and the filtering loss head in the sand filtration apparatus according to the invention;

Fig. 4 is a graph showing the relation between the filtering loss head and the filtering velocity in the sand filtration apparatus according to the invention and a filtration apparatus of a downwardly directed flow type of the prior art;

Figs. 5(a), 5(b) and 5(c) are views showing the manner in which water flows in the sand filtration apparatus;

Fig. 6 is a graph showing the relation between the angle of the weather boards and the critical velocity for causing fluidization of the sand to occur;

Figs. 7(a)—7(d) are graphs showing the relation between the angle formed by the shade of the cone shape in the lower portion of the wall between the sand filtration chamber and the treated water chamber with respect to the vertical and the distance covered by the movement of the filter medium in the sand filtration apparatus according to the invention;

Figs. 8(a), 8(b) and 8(c) are graphs showing the data obtained when the sand filtration apparatus according to the invention was used for filtering secondary treated water, showing them with respect to SS, BOD and COD respectively; and

Fig. 9 is a sectional view of the sand filtration apparatus comprising another embodiment.

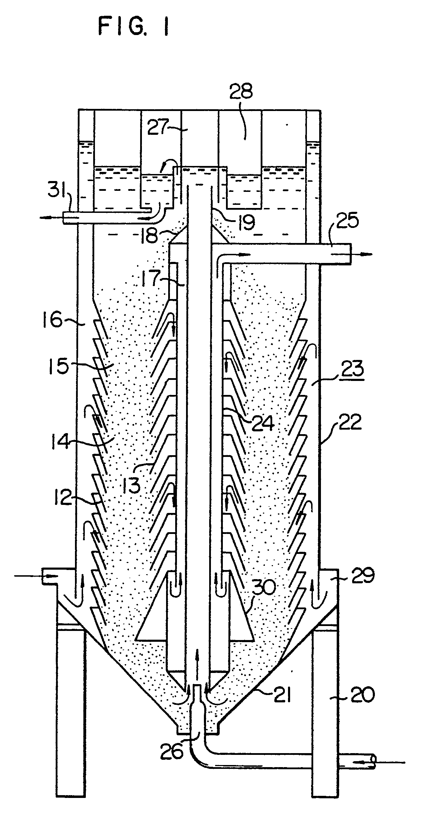

Referring to Fig. 1, one embodiment of the sand filtration apparatus is shown in a sectional view, in which a pedestal 20 supports thereon a cylindrical tank body 22 divided into an untreated water inlet chamber 16, a filtration chamber 15 and a treated water chamber 17 by cylindrical support walls 12 and 13. The support walls 12 and 13 are substantially coaxial with the cylindrical tank body 22. A filter medium, such as sand, is contained in the filtration chmaber 15 defined between the support walls 12 and 13 which are constructed such that they allow water to pass therethrough but do not allow the filter medium to pass therethrough. As shown in Fig. 1, the support walls 12 and 13 are constituted by weather boards located parallel to each other and directed outwardly upwardly and inwardly upwardly respectively. The support wall 13 between the filtration chamber 15 and treated water chamber 17 has a shade 30 of a cone shape mounted at its lower portion. The filtration chamber 15 has a floor which constitutes a tank bottom 21 of an inverted cone shape, and the shade 30 extends toward the tank bottom 21, to define a space between the shade 30 and the tank bottom 21 for the filter medium to move therethrough in circulation.

The inlet chamber 16 has an inlet pipe 29 connected to its lower portion and having a partition plate attached to its opening. The treated water chamber 17 has an outlet pipe 25 connected thereto and extending at its opening to a lower portion of the treated water chamber 17.

A spray nozzle 26 is mounted in a lower portion of the filtration chamber 15, and an upwardly extending circulation pipe 19 extends above the spray nozzle 26 and has an opening in an upper portion of the filtration chamber 15. A chute 18 of a cone shape is attached to a portion of the circulation pipe 19 slightly below its upper opening and extends to the support wall 13.

A regulating pipe 27 and a separating tank 28 for discharging scum are mounted around the upper opening of the circulation pipe 19.

Untreated water fed through the inlet pipe 29 is introduced into the inlet chamber 16 and passes through the support wall 12 into the filtration chamber 15. Owing to the pressure of the untreated water, the water flows through the filter medium in the filtration chamber 15 from which it is introduced into the treated water chamber 17 through the support wall 13. When the water flows through the filter medium in the filtration chamber 15, foreign matters in the water are separated from the water and adheres to the filter medium or sand. The clear treated water thus obtained is released from the treated water chamber 17 through the outlet pipe 25.

Air is blown through the spray nozzle 26 into the filtration chamber 15. Air currents cause the sand on the floor surface 21 of the inverted cone shape of the filtration chamber 15 to soar in turbulent flow in the circulation pipe 19. The foreign matters adhering to the filter medium are separated therefrom by the air currents of turbulent flow and released together with the sand through the upper opening of the circulation pipe 19. Since the foreign matters are lighter than the filter medium, they collect together on the surface of the water and are discharged from the separating tank 28 through a scum discharging pipe 31. Even if the foreign matters are relatively heavy, they are caused to float on the water directed toward the separating tank 28 to be collected therein. Meanwhile the filter medium released through the upper opening of the circulation pipe 19 is led downwardly through the regulating pipe 27 and returned to the filtration chamber 15 through the chute 18. At this time, the filter medium is distributed by the chute 18 in such a manner that the sand of large particles size is placed near the inlet side and that of small particle size is arranged near the treated water chamber.

By continuously blowing air currents through the spray nozzle 26 for a substantial time, all the filter medium in the filtration chamber 15 can be reactivated while moving through the circulation pipe 19.

The weather boards constituting the support wall 13 between the filtration chamber 15 and the treated water chamber 17 preferably form an angle in the range between 20 and 45 degrees with respect to the horizontal. This angle range has the effect of avoiding the filter medium moving between the weather boards into the treated water chamber 17 due to the pressure of water. When the angle is 30 degrees, the sand can be most advantageously held in place within the filtration chamber 15.

The angle of the shade 30 is important in causing the filter medium in the filtration chamber 15 to shift uniformly downwardly. When the angle formed by the shade 30 with respect to the vertical is in the range between 20 and 45 degrees, the filter medium can be moved substantially uniformly in the downward direction. The range between 30 and 40 degrees is more preferable.

In the sand filtration apparatus according to the invention, the filter medium reactivated by removing the foreign matters therefrom is returned to the pile of filter medium in the filtration chamber 15 through an upper central portion of the chamber, so that coarse filter medium is distributed to a position near the inlet chamber 16 and fine filter medium to a position near the treated water chamber 17. That is, in Fig. 1, the coarse filter medium is distributed immediately inwardly of the support wall 12 and the fine filter medium immediately outwardly of the support wall 13 with the filter medium located in between having the grain size successively reduced in going from the inlet chamber side toward the treated water side in the filtration chamber 15.

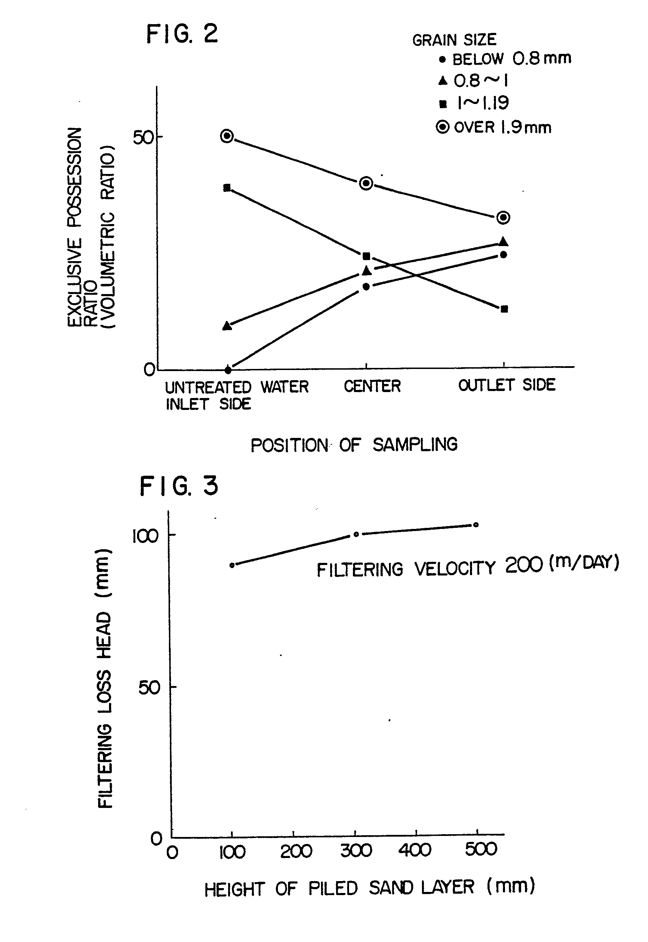

Fig. 2 shows the distribution of the filter medium in the filtration chamber 15. Sampling of the sand layers on the inlet side, central portion and outlet side was carried out, and the filter medium was divided according to its grain size into groups of below 0.8 mm, between 0.8 and 1 mm, between 1 and 1.19 mm and above 1.19 mm. As shown in Fig. 2, the filter medium of over 1.19 mm accounted for 60% of all the filter medium on the inlet side and no fine filter medium or less than 0.8 mm was found. On the outlet side, the number of filter medium of over 1.19 mm was gradually reducing while that of filter medium of below 0.8 mm or between 0.8 and 1 mm was gradually increasing.

The distribution of the filter medium in the filtration chamber 15 that sand particles of large size are located in an outer peripheral portion and sand particles of small size are located in an inner peripheral portion makes the sand filtration apparatus according to the invention quite useful. In an filtration apparatus of the cylindrical shape, water will flow inwardly from the outer periphery of the filtration layer, so that the velocity at which the water is filtered or filtering velocity will naturally become higher in going toward the inner portion of the filtration layer. Thus the relation will be established that the filtering velocity is low in a portion of the filtration layer of a high percentage of void consisting of coarse sand particles and high in a portion of the filtration layer of a low percentage of void consisting of fine sand particles, so that the solid particles will be caught by the filter medium with a high degree of efficiency through the entire filtration layer. The aforesaid distribution of the sand particles offers the additional advantage that it takes time before material floating or suspended in the water causes obturation of the filtration layer. Thus no problem will be raised with regard to obturation of the filtration layer because the filter medium is always reactivated by the circulating flow of sand described hereinabove.

The aforesaid distribution of the filter medium offers the additional advantage that the filtering loss head is reduced. The term "filtering loss head" is defined as referring to the difference in pressure between the water introduced into the filtration apparatus and the water released therefrom which represents the pressure lost by the water while flowing through the filtration apparatus in terms of mm Aq.

Fig. 3 shows the results of tests conducted on the filtering loss head (mm) by passing water through filtration layers of a height varying from 100 to 500 mm at a filtration velocity of 200 m/day (the rate of entry of water into the filtration chamber) in the sand filtration apparatus according to the invention. The results show that the filtering loss head merely had a change of 15 mm when the height of the filtration layer was varied from 100 to 500 mm, showing no large change in the filtering loss head.

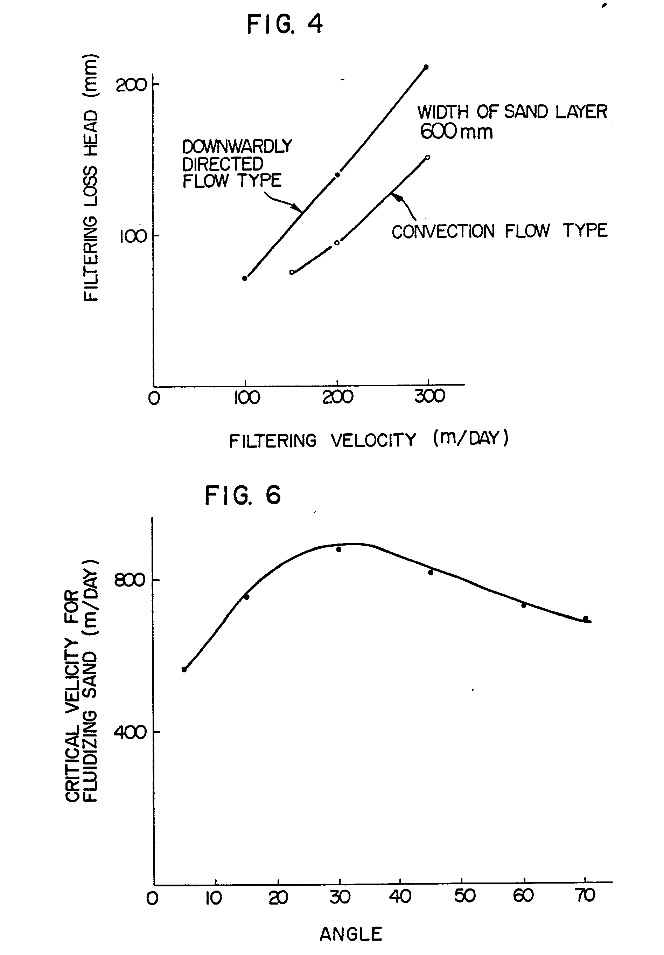

Fig. 4 shows the results of tests conducted on the filtering loss head by passing water through a filtration layer of a length of 600 mm at a filtration velocity of 100—300 mm (inflow velocity) in the sand filtration apparatus according to the invention and a downwardly directed flow type filtration apparatus of the prior art. It will be seen in the graph shown in Fig. 4 that the filtering loss head is smaller by about 30% in the sand filtration apparatus according to the invention than in the filtration apparatus of the prior art.

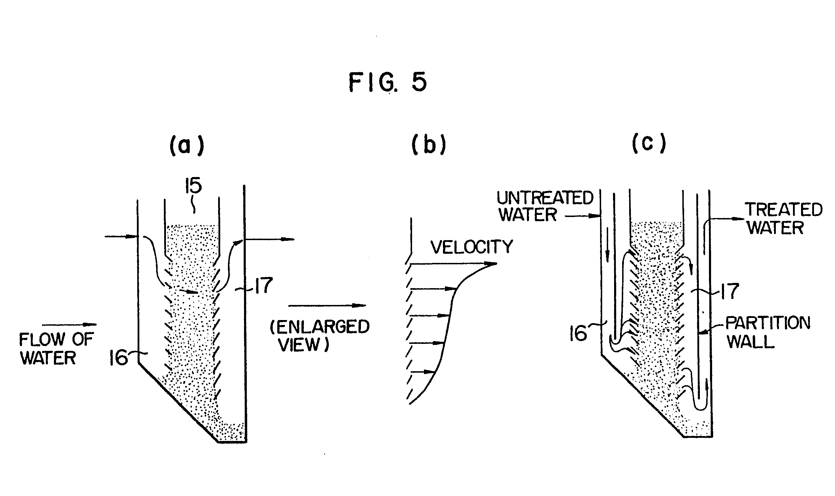

When a sand filtration apparatus has a horizontally directed liquid channel extending through a filtration layer of substantial vertical height, as is the case with the sand filtration apparatus according to the invention, the flow velocity of the liquid flowing from the untreated liquid side toward the treated liquid side might show variations depending on the position of the liquid. Fig. 5(a) shows as a model the left half portion of the apparatus in cross section in which water flows from the inlet chamber 16 to the treated water chamber 17 through the filtration chamber 15. Fig. 5(b) shows the flow velocities of the water flowing from left to right. It will be seen that the flow velocities are higher in going toward the top of the stream and lower in going toward the bottom thereof. If the stream of water flowing through the filtration layer had non-uniform flow velocities, the upper portion of the filtration layer might be scraped away by the water of high flow velocity to provide a short-circuit path. To avoid this phenomenon, the inlet chamber 16 and the treated water chamber 17 are each preferably provided with a partition wall. By feeding untreated water to the inlet chamber 16 at its lower portion in the sand filtration apparatus having the partition plates described hereinabove, the untreated water can be made to flow at a substantially uniform flow velocity through the filtration layer in its upper, middle and lower portions, and withdrawing of the treated water is advantageously effected from the treated water chamber 17 at its lower portion.

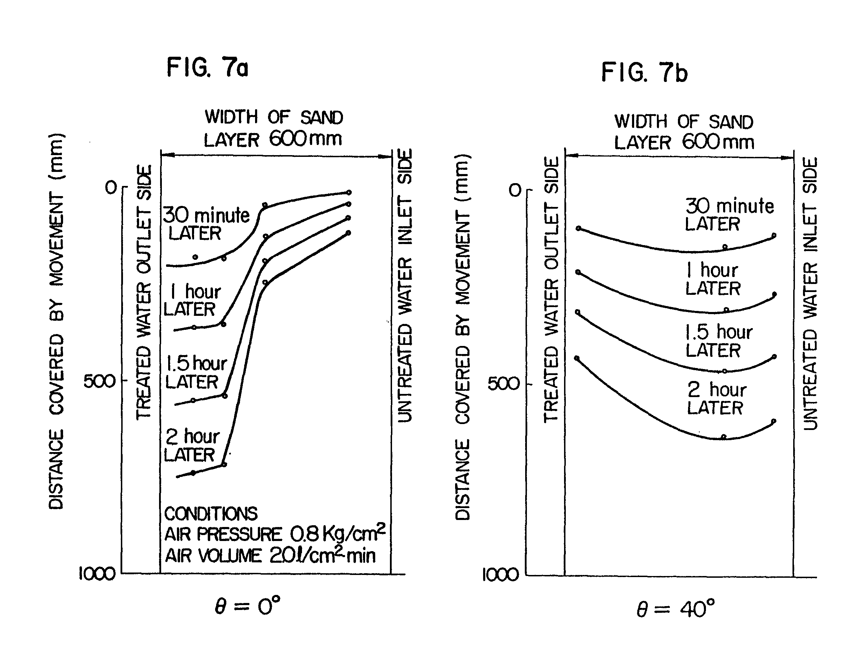

It is necessary to avoid introduction of the filter medium into the treated water chamber 17 by moving between the weather boards constituting the support wall 13 between the filtration chamber 15 and the treated water chamber 17. If the angle formed by the weather boards with respect to the horizontal were small, the sand would be made to ascend the inclined surfaces of the weather boards and move into the treated water chamber 17 by the flow of the water. If this angle were too large, the flow of the water would be interrupted and the flow velocity would rise at the opening, resulting in the sand moving over the weather boards. Fig. 6 shows the results of tests conducted on the angle formed by the weather boards with respect to the horizontal in relation to the flow velocity of water with a view to determining the angle at which the sand might move over the weather boards. The graphs shown in Fig. 6 shows that is the flow velocity of the water is located above the curve, the sand will move over the weather boards and that the sand will not move over the weather boards when the flow velocity is below the curve.

It will be seen in the graph shown in Fig. 6 that when the angle formed by the weather boards with respect to the horizontal is in the range between 20 and 45 degrees, the sand is prevented from being introduced into the treated water chamber 17 even if the flow velocity of the water is 800 m/day (on the inlet chamber side), and that the angle at which the movement of the sand is avoided until the flow velocity is maximized is about 30 degrees.

When the support wall 13 is constituted by wire netting, the wire netting used is preferably formed of stainless steel and the netting is preferably of 20—40 mesh. By using this type of wire netting, it is possible to avoid the movement of the sand therethrough even when the flow velocity of water is over 800 m/day.

Investigation into the movement of the sand within the filtration chamber 15 has been conducted. The filter medium in the filtration chamber preferably behaves such that it has the same uniform fluidity on the untreated water inlet side and the treated water outlet side.

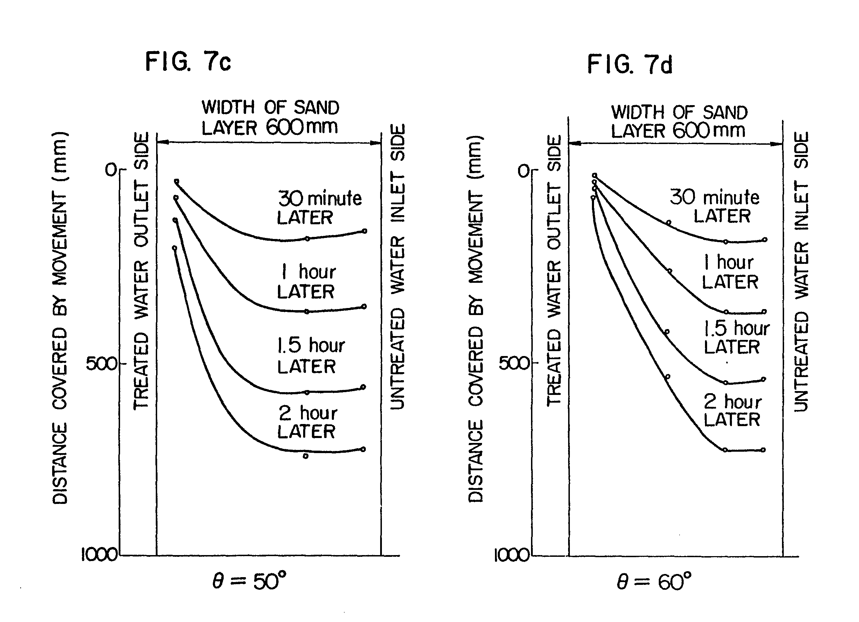

Figs. 7(a), 7(b), 7(c) and 7(d) show the results of tests conducted on the movement of the filter medium obtained when the angle θ formed by the shade 30 at the lower end portion of the support wall 13 between the filtration chamber 15 and the treated water chamber 17 with respect to the vertical was varied to 0, 40, 50 and 60 degrees respectively.

When the angle θ was 0 degree as shown in Fig. 7(a), the sand on the treated water outlet side had a high fluidity and the sand on the untreated water inlet side showed almost no fluidity. This phenomenon would be accounted for by the fact that the treated water side provides a passage for the sand to move toward an air lift pump and the cleaned sand is small in amount.

When the angle θ was 50—60 degrees as shown in Figs. 7(c) and 7(d), the sand on the untreated water inlet side had a high fluidity because the passage for the sand to move is nearer to the untreated water inlet side than the central portion of the sand layer, and the sand on the treated water outlet side showed almost no tendency to move because the force urging it to move was low, possibly due to the fact that the angle of inclination of the shade 30 is in the range between 30 and 40 degrees with respect to the horizontal which is substantially equal to the angle of rest (=30 degrees) of sand in the water.

When the angle θ was 40 degrees as shown in Fig. 7(b), the sand on the untreated water inlet side has a high speed of movement and the sand on the treated water outlet side was not inordinately slow in movement, indicating that the sand in the filtration chamber was as a whole balanced in its fluidity. Such balanced fluidity of the sand was obtained when the angle θ was in the range between 20 and 45 degrees.

## Example

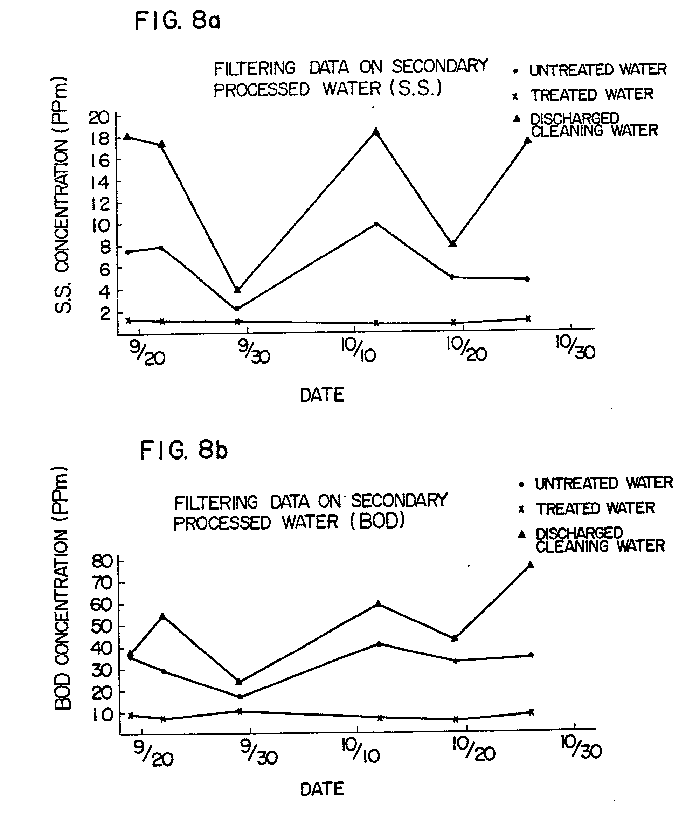

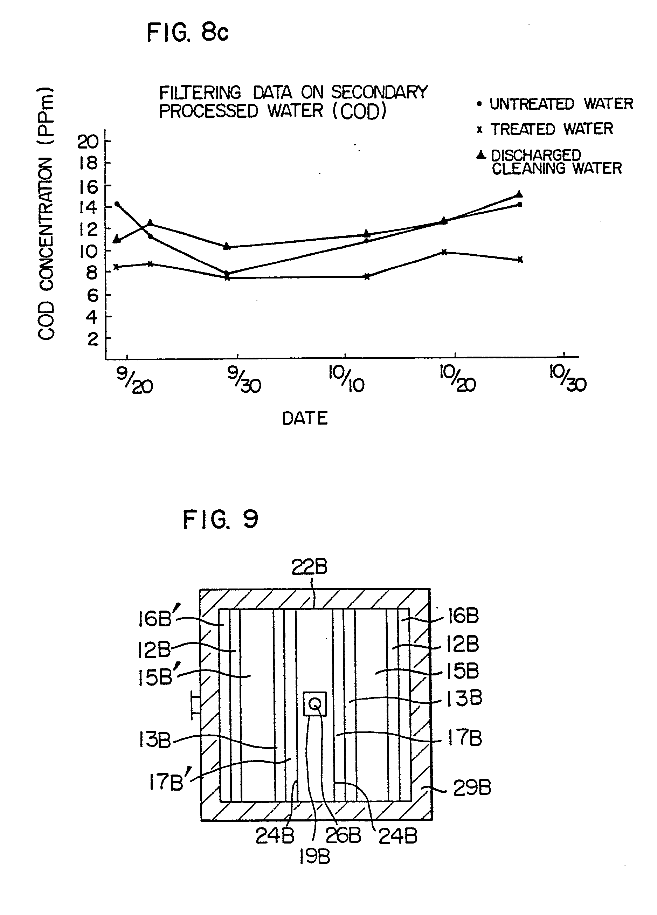

The sand filtration apparatus according to the invention was provided and tests were run for about a month to see how it operates. The particulars of the apparatus are as follows: diameter of the tank body, 2.2 m; height of the tank body 22 from the tank bottom 21, 4.7 m; angle of inclination of the support wall, 30 degrees; angle of inclination of the shade 30, 40 degrees; flow velocity of water through the filtration layer (inflow velocity), 200 m/day; flow rate of untreated water, 60 $m^3$/hour; flow rate of cleaning air, 6 $m^3$/hour; and flow rate of discharged cleaning water, 6 $m^3$/hour. The tests consisted in treating secondary processed water of the sewage and the results are shown in Figs. 8(a), 8(b) and 8(c) indicating SS concentration, BOD and COD respectively. In the graphs shown in Figs. 8(a)—8(c), ., x and Δ represent untreated water, treated water and discharged cleaning water respectively. It will be seen that the values of SS, BOD and COD of the treated water dropped even if the SS, BOD and COD of the untreated water showed variations in values.

The description set forth hereinabove refers to the sand filtration apparatus according to the invention as being cylindrical in form. However, the apparatus may be angled as shown in Fig. 9. In this case inlet chambers 16B and 16B' are located on the left and right sides, filtration chambers 15B and 15B' are located inwardly of the inlet chambers 16B and 16B', and treated water chambers 17B and 17B' are located inwardly of the filtration chambers 15B and 15B'. A spray nozzle 26B and a circulation pipe 19B are located in a central portion.

## Claims

1. A sand filtration apparatus comprising:

(a) a tank body (22) containing inner and outer walls (13, 12) each permitting water to pass therethrough while blocking sand,

(b) a filtration chamber (15) defined by said inner and outer walls (13, 12) and containing a bed (14) of said sand, said outer wall (12) being connected to a water inlet means (16, 29) and said inner wall (13) to a water outlet means (17, 25),

(c) a circulation pipe (19) extending from the bottom to the top of said tank body (22),

(d) means (26) for introducing sand from said bed (14) into said circulation pipe (19) at the bottom thereof and discharging said sand from the top opening of said circulation pipe (19) together with water,

(e) means (28, 31) for withdrawing foreign matters separated from said sand discharged from said top opening, and

(f) regulating means for causing the sand discharged from the top opening of said circulation pipe (19) to settle on the same bed (14) with such a particle size gradient that the sand particles are the closer to the outer wall (12) the larger they are,

characterised in that said regulating means comprises a pipe (27) and a conical chute (18) surrounding said circulation pipe (19) near said top opening, said pipe (27) and circulation pipe (19) forming a gap through which said sand falls on said sand bed in forming a substantially conical upper bed surface on which coarser sand particles settle closer to said outer wall (12) and finer sand particles settle closer to said inner wall (13).

2. The apparatus of claim 1, further comprising a shade (30) of a conical shape, the cone angle of which is adjusted such that coarse sand particles and fine sand particles move downwardly substantially evenly in said filtration chamber (15).

3. The apparatus of claim 1 or 2, wherein said inlet means (16, 29) comprises an inlet pipe (29) and an inlet chamber (16) defined by said tank body (22) and said outer wall (12).

4. The apparatus of any of claims 1 to 3, wherein said outlet means (17, 25) comprises an outlet pipe (25) and a treated water chamber (17) defined by said inner wall (13) and said circulation pipe (19).

5. The apparatus of any of claims 1 to 4, wherein said means (26) for introducing said sand into said circulation pipe (19) is a spray nozzle (26) positioned at the bottom of said circulation pipe (19).

6. The apparatus of any of claims 1 to 5, wherein both of said inner and outer walls (12, 13) are constituted by a plurality of slanted plates uprising outwardly which partially overlap each other with small gaps.

## Patentansprüche

1. Sandfiltervorrichtung, umfassend

(a) ein Tankgehäuse (22) mit Innen- und Außenwänden (13, 12), die jeweils Wasser hindurchlassen, jedoch Sand abhalten,

(b) eine zwischen der Innen- und der Außenwand (13, 12) definierte und ein Bett (14) aus dem Sand enthaltende Filter-kammer (15), wobei die Außenwand (12) an eine Wasser-Zulaufeinrichtung (16, 29) und die Innenwand (13) an eine Wasser-Auslaßeinrichtung (17, 25) angeschlossen ist,

(c) ein Zirkulationsrohr (19), das von der Unterseite zur Oberseite des Tankgehäuses (22) verläuft,

(d) eine Einrichtung (26) zum Einleiten von Sand aus dem Bett (14) in das Zirkulationsrohr (19) an dessen Unterseite und zum Abführen des Sandes zusammen mit Wasser von der oberen Öffnung des Zirkulationsrohrs (19),

(e) eine Einrichtung (28, 31) zum Entfernen von Fremdstoffen, die sich von dem an der oberen Öffnung austretenden Sand trennen, und

(f) eine Reguliereinrichtung, die bewirkt, daß der an der oberen Öffnung des Zirkulationsrohrs (19) abgegebene Sand sich auf das Sandbett (14) mit einem derartigen Teilchengrößen-Gradient absetzt, daß sich die Sandteilchen mit zunehmender Größe näher an der Außenwand (12) befinden,

dadurch gekennzeichnet, daß die Reguliereinrichtung ein Rohr (27) und eine Rutsche (18) umfaßt, die das Zirkulationsrohr (19) nahe der oberen Öffnung umgeben, wobei das Rohr (27) und das Zirkulationsrohr (19) eine Spalt bilden, durch den der Sand auf das Sandbett fällt und dabei eine im wesentlichen konische Bettoberfläche bildet, auf der sich grobere Sandteilchen näher zur Außenwand (12) und feinere Sandteilchen näher zur Innenwand (13) ablagern.

2. Vorrichtung nach Anspruch 1, ferner umfassend einen Schirm (30) mit konischer Form, deren Konuswinkel so eingestellt ist, daß sich die groben und die feinen Sandteilchen in der Filterkammer (15) im wesentlichen gleichmäßig nach unten bewegen.

3. Vorrichtung nach Anspruch 1 oder 2, wobei die Zulaufeinrichtung (16, 29) ein Zulaufrohr (29) und eine von dem Tankgehäuse (22) und der Außenwand (12) definierte Zulaufkammer (16) aufweist.

4. Vorrichtung nach einem der Ansprüche 1 bis 3, wobei die Auslaßeinrichtung (17, 25) ein Auslaßrohr (25) und eine von der Innenwand (13) und dem Zirkulationsrohr (19) definierte Kammer (17) für behandeltes Wasser aufweist.

5. Vorrichtung nach einem der Ansprüche 1 bis 4, wobei die Einrichtung (26) zur Einleitung des Sandes in das Zirkulationsrohr (19) eine am unteren Ende des Zirkulationsrohrs (19) angeordnete Sprühdüse (26) ist.

6. Vorrichtung nach einem der Ansprüche 1 bis 5, wobei sowohl die Innen- als auch die Außenward (12, 13) von mehreren schräg nach oben und außen verlaufenden Platten gebildet werden, die mit kleinen Spalten einander teilweise überlappen.

**Revendications**

1. Appareil pour filtrer à sable, comprenant:

(a) un corps formant cuve (22) comprenant des parois intérieure et extérieure (13,12) laissant chacune passer l'eau à travers elle, tout en retenant le sable,

(b) une chambre de filtration (15) définie par lesdites parois intérieure et extérieure (13,12) et contenant un lit (14) dudit sable, ladite paroi extérieure (12) étant raccordée à des moyens (16,29) d'admission de l'eau et ladite paroi intérieure (13) étant raccordée à des moyens (17,25) de sortie de l'eau,

(c) une canalisation de circulation (19) s'étendant depuis le fond jusqu'au sommet dudit corps formant cuve (22),

(d) des moyens (26) pour introduire le sable à partir dudit lit (14) dans ladite canalisation de circulation (19), au niveau de la partie inférieure de cette dernière, et pour refouler ledit sable, en même temps que l'eau, à partir de l'ouverture supérieure de ladite canalisation de circulation (19),

(e) des moyens (28,31) pour retirer des substances étrangères séparées dudit sable et refoulées hors de ladite ouverture supérieure, et

(f) des moyens de régulation pour amener le sable refoulé par l'ouverture supérieure de ladite canalisation de circulation (19) à se déposer sur le lit de sable (14), avec un gradient des tailles des particules tel que plus les particules de sable sont grosses, plus elles sont rapprochées de la paroi extérieure (12),

caractérisé en ce que lesdits moyens de régulation comprennent une canalisation (27) et une goulotte conique de descente (18) qui entoure ladite canalisation de circulation (19) à proximité de ladite ouverture supérieure, ladite canalisation (27) et ladite canalisation de circulation (19) délimitant un interstice, dans lequel ledit sable tombe sur ledit lit de sable en formant une surface supérieure sensiblement conique du lit, sur laquelle les particules de sable les plus grosses se déposent en étant plus rapprochées de ladite paroi extérieure (12), et lesdites particules de sable plus finesse déposent en étant plus rapprochées de ladite paroi intérieure (13).

2. Appareil selon la revendication 1, comportant en outre un écran (30) en forme de cône, dont l'angle est réglé de manière que les grosses particules de sable et les fines particules de sable descendent sensiblement de façon uniforme dans ladite chambre de filtration (15).

3. Appareil selon la revendication 1 ou 2, dans lequel lesdits moyens d'admission (16,29) comprennent une canalisation d'admission (29) et une chambre d'admission (16) définie par ledit corps en forme de cuve (22) et ladite paroi extérieure (12).

4. Appareil selon l'une quelconque des revendications 1 à 3, dans lequel lesdits moyens de sortie (17,25) comprennent une canalisation de sortie (25) et une chambre (17) pour l'eau traitée, définie par ladite paroi intérieure (13) et ladite canalisation de circulation (19).

5. Appareil selon l'une quelconque des revendications 1 à 4, dans lequel lesdits moyens (26) permettant l'introduction dudit sable dans ladite canalisation de circulation (19) sont une buse de pulvérisation (26) disposée à la partie inférieure de ladite canalisation de circulation (19).

6. Appareil selon l'une quelconque des revendications 1 à 5, dans lequel à la fois lesdites parois intérieure et extérieure (12,13) sont constituées par une pluralité de plaques inclinées, qui remontent vers l'extérieur et se recouvrent partiellement en délimitant entre elles de faibles interstices.

FIG. 1

## FIG. 2

GRAIN SIZE
- • BELOW 0.8 mm
- ▲ 0.8 ~ 1
- ■ 1 ~ 1.19
- ◎ OVER 1.9 mm

EXCLUSIVE POSSESSION RATIO (VOLUMETRIC RATIO)

50

0

UNTREATED WATER INLET SIDE    CENTER    OUTLET SIDE

POSITION OF SAMPLING

## FIG. 3

FILTERING LOSS HEAD (mm)

100

FILTERING VELOCITY 200 (m/DAY)

50

0

0    100    200    300    400    500

HEIGHT OF PILED SAND LAYER (mm)

2

FIG. 4

FIG. 6

FIG. 5

(a)    (b)    (c)

FIG. 7b

WIDTH OF SAND LAYER 600mm

UNTREATED WATER INLET SIDE

TREATED WATER OUTLET SIDE

30 minute LATER
1 hour LATER
1.5 hour LATER
2 hour LATER

$\theta = 40°$

DISTANCE COVERED BY MOVEMENT (mm)

0
500
1000

FIG. 7a

WIDTH OF SAND LAYER 600mm

UNTREATED WATER INLET SIDE

TREATED WATER OUTLET SIDE

30 minute LATER
1 hour LATER
1.5 hour LATER
2 hour LATER

CONDITIONS
AIR PRESSURE 0.8 Kg/cm$^2$
AIR VOLUME 20$\ell$/cm$^2$min

$\theta = 0°$

DISTANCE COVERED BY MOVEMENT (mm)

0
500
1000

FIG. 7c

WIDTH OF SAND LAYER 600mm

DISTANCE COVERED BY MOVEMENT (mm)

TREATED WATER OUTLET SIDE

UNTREATED WATER INLET SIDE

30 minute LATER

1 hour LATER

1.5 hour LATER

2 hour LATER

$\theta = 50°$

FIG. 7d

WIDTH OF SAND LAYER 600mm

DISTANCE COVERED BY MOVEMENT (mm)

TREATED WATER OUTLET SIDE

UNTREATED WATER INLET SIDE

30 minute LATER

1 hour LATER

1.5 hour LATER

2 hour LATER

$\theta = 60°$

0 128 234

## FIG. 8a

FILTERING DATA ON SECONDARY
PROCESSED WATER (S.S.)

- UNTREATED WATER
- x TREATED WATER
- ▲ DISCHARGED CLEANING WATER

S.S. CONCENTRATION (PPm) vs DATE

## FIG. 8b

FILTERING DATA ON SECONDARY
PROCESSED WATER (BOD)

- UNTREATED WATER
- x TREATED WATER
- ▲ DISCHARGED CLEANING WATER

BOD CONCENTRATION (PPm) vs DATE

## FIG. 8c

FILTERING DATA ON SECONDARY
PROCESSED WATER (COD)

- • UNTREATED WATER
- × TREATED WATER
- ▲ DISCHARGED
  CLEANING WATER

COD CONCENTRATION (PPm)

DATE

## FIG. 9